(19) Europäisches Patentamt / European Patent Office / Office européen des brevets

(11) **EP 4 022 175 B1**

(12) **FASCICULE DE BREVET EUROPEEN**

(45) Date de publication et mention
de la délivrance du brevet:
**19.04.2023 Bulletin 2023/16**

(21) Numéro de dépôt: **20775379.9**

(22) Date de dépôt: **20.08.2020**

(51) Classification Internationale des Brevets (IPC):
*F01D 17/16* (2006.01)     *F01D 17/20* (2006.01)
*F02C 9/20* (2006.01)     *F04D 29/56* (2006.01)

(52) Classification Coopérative des Brevets (CPC):
**F01D 17/162; F01D 17/20; F02C 9/20;
F04D 29/563;** F05D 2250/90; F05D 2260/50

(86) Numéro de dépôt international:
**PCT/FR2020/051489**

(87) Numéro de publication internationale:
**WO 2021/038161 (04.03.2021 Gazette 2021/09)**

(54) **GUIGNOL POUR UN DISPOSITIF DE CALAGE VARIABLE D'UNE TURBOMACHINE**

VERSTELLHEBEL FÜR EINE VARIABLE VERSTELLEINRICHTUNG EINER TURBOMASCHINE

BELLCRANK FOR A VARIABLE ADJUSTING DEVICE OF A TURBOMACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.08.2019 FR 1909421**

(43) Date de publication de la demande:
**06.07.2022 Bulletin 2022/27**

(73) Titulaire: **SAFRAN AIRCRAFT ENGINES
75015 Paris (FR)**

(72) Inventeurs:
• **BARBIER-NEVEU, Clélia, Antoinette
77550 MOISSY-CRAMAYEL (FR)**
• **BOSTON, Erick, Jacques
77550 MOISSY-CRAMAYEL (FR)**
• **ROBERT, Yann, Thierry
77550 MOISSY-CRAMAYEL (FR)**

(74) Mandataire: **Gevers & Orès
Immeuble le Palatin 2
3 Cours du Triangle
CS 80165
92939 Paris La Défense Cedex (FR)**

(56) Documents cités:
EP-A1- 0 765 992     EP-A1- 3 536 912
EP-B1- 0 765 992     FR-A1- 2 856 424
FR-A1- 2 936 559     FR-A1- 2 960 611
FR-A1- 3 076 325     US-A- 4 295 784
US-A1- 2010 278 639

## Description

## Domaine technique de l'invention

La présente invention concerne un guignol pour un dispositif de calage variable d'une turbomachine d'aéronef, ainsi qu'un dispositif de calage variable comportant un tel guignol.

## Arrière-plan technique

L'état de la technique est par exemple illustré par le document FR-A1-2 960 611.

Les aubes de stator à calage variable (aussi appelées VSV - acronyme de *Variable Stator Vanes*) d'une turbomachine sont portées par un carter annulaire externe, en général d'un compresseur de la turbomachine. Chaque aube comprend une pale qui est reliée à son extrémité radialement externe par une platine à contour sensiblement circulaire à un pivot cylindrique radial qui définit l'axe de rotation de l'aube et qui est guidé en rotation dans un orifice correspondant du carter externe. L'extrémité radialement interne de la pale de chaque aube comprend en général un second pivot cylindrique s'étendant le long de l'axe de rotation de l'aube et guidé en rotation dans un orifice d'un carter interne du compresseur.

L'extrémité radialement externe du pivot externe de chaque aube est reliée par un levier ou une biellette à un anneau de commande déplacé en rotation autour du carter externe par un actionneur du type vérin ou analogue. La rotation de l'anneau de commande est transmise par les biellettes aux pivots externes des aubes et les fait tourner autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une première position « d'ouverture » ou « de pleine ouverture » dans laquelle chaque aube s'étend sensiblement parallèlement à l'axe longitudinal de la turbomachine, et une seconde position « de fermeture » ou « de quasi-fermeture » dans laquelle les aubes sont inclinées par rapport à l'axe de la turbomachine et réduisent ainsi la section de passage de l'air à travers l'étage d'aubes.

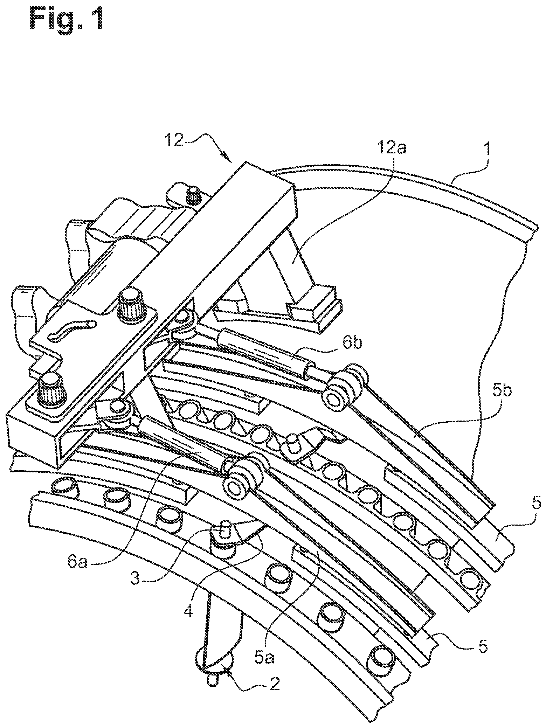

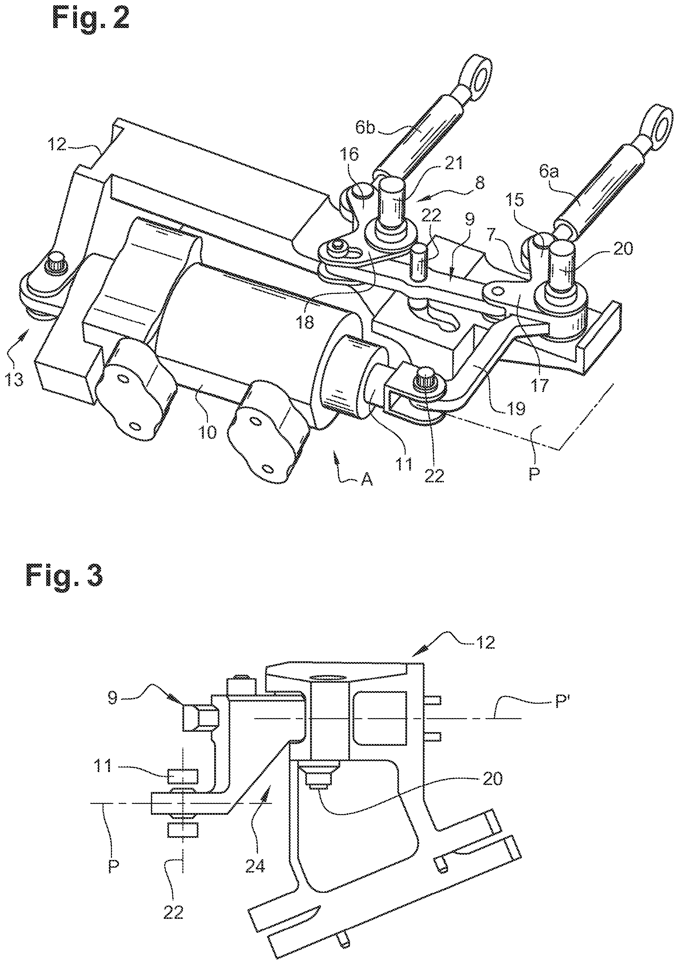

Le document FR-A1-2 856 424 de la demanderesse décrit un dispositif de calage variable de deux rangées adjacentes d'aubes, qui est représenté aux figures 1 et 2 et comprend :

- un actionneur A fixé sur un carter 1,
- un boîtier de commande 12 fixé sur le carter 1,
- des anneaux de commande 5 destinés à être montés rotatifs autour du carter 1 en vue de l'actionnement des deux rangées d'aubes 2,
- un premier système de liaison comportant un premier guignol 7 à quatre articulations ; le guignol 7 est articulé autour d'un pivot 20 sur le boîtier de commande 12 et comprend un premier bras 19 articulé sur la tige de piston 11, un second bras 17 articulé à une extrémité d'une barre de synchronisation 9, et un troisième bras 15 articulé à une extrémité d'un premier ridoir 6a dont une extrémité opposée est articulée sur une chape 5a du premier anneau 5, et
- un second système de liaison comportant un second guignol 8 à trois articulations ; le guignol 8 est articulé autour d'un pivot 21 sur le boîtier de commande 12 et comprend un premier bras 18 articulé sur une extrémité opposée de la barre de synchronisation 9, et un second bras 16 articulé à une extrémité d'un second ridoir 6b dont une extrémité opposée est articulée sur une chape 5b du second anneau 5.

Dans l'exemple représenté à la figure 2, le bras 19 du guignol 7 est sensiblement plan. L'extrémité du bras 19 reliée à la tige de piston 11 est située dans un plan P qui passe sensiblement par le milieu de l'axe 23 d'articulation de cette extrémité. Ce plan P passe également par l'extrémité opposée du bras 19 reliée au pivot 20.

Cependant, dans certaines configurations répondant à des problèmes d'encombrement, les extrémités opposées du bras 19 de liaison du guignol 7 à la tige de piston 11, sont situées dans deux plans parallèles et espacés l'un de l'autre. En fonctionnement, ce type de configuration entraîne des efforts importants dans le guignol qui peut s'user rapidement voire se rompre. Une des causes principales de cette usure est le moment engendré au niveau du pivot. En effet, la liaison pivot au boîtier de commande reçoit un effort déporté par rapport à son centre de rotation.

La présente invention propose une solution à ce problème, qui est simple, efficace et économique.

## Résumé de l'invention

La présente invention propose un guignol pour un dispositif de calage variable d'une turbomachine d'aéronef, ce guignol comportant un corps monobloc comportant une première partie d'articulation configurée pour être reliée à un boîtier de commande du dispositif, une deuxième partie d'articulation configurée pour être reliée à une barre de synchronisation du dispositif, une troisième partie d'articulation configurée pour être reliée à une tige de piston d'un actionneur du dispositif, et une quatrième partie d'articulation configurée pour être reliée à un ridoir du dispositif, la troisième partie d'articulation comportant une première patte qui comporte un premier orifice configuré pour recevoir un axe d'articulation de la tige de piston et qui s'étend dans un plan P sensiblement perpendiculaire à l'axe de cet orifice, caractérisé en ce que la première partie d'articulation comprend une seconde patte s'étendant sensiblement dans ledit plan P, et une portion tubulaire à distance dudit plan P, la seconde patte et la portion tubulaire comportant des orifices présentant des axes alignés qui sont configurés pour recevoir un axe commun d'articulation du boîtier de commande et qui sont sensiblement parallèle au premier orifice, la seconde patte étant séparée de la portion tubulaire par un espace libre.

En l'absence de la seconde patte, la liaison pivot du guignol au boîtier de commande recevrait un effort déporté, par rapport au centre de rotation passant par le milieu de la portion tubulaire. La présence de la seconde patte permet de reprendre au moins une partie du moment qui s'applique en fonctionnement au niveau de la portion tubulaire et du pivot, et ainsi de limiter les contraintes de transmission d'effort dans le guignol. Le fait de ne pas modifier ou déplacer les axes d'articulation du guignol permet de ne pas modifier la loi de calage.

Le guignol selon l'invention peut comprendre une ou plusieurs des caractéristiques suivantes, prises isolément les unes des autres ou en combinaison les unes avec les autres :

- ledit corps comprend un bras en L qui comprend deux branches sensiblement perpendiculaires, une première de ces branches étant reliée à la portion tubulaire et l'autre de ces branches étant reliée aux première et seconde pattes ;
- le corps comprend des troisième et quatrième pattes sensiblement parallèles entre elles et audit plan P, ces troisième et quatrième pattes comportant des premiers orifices présentant des axes alignés de réception d'un axe commun d'articulation dudit ridoir, et des seconds orifices présentant des axes alignés de réception d'un autre axe commun d'articulation de ladite barre de synchronisation ;
- la portion tubulaire a une longueur supérieure à une distance entre lesdites troisième et quatrième pattes ;
- la portion tubulaire est séparée de la deuxième patte d'une distance supérieure ou égale à une épaisseur de cette deuxième patte ;
- chacun des orifices de la portion tubulaire et de la seconde patte est débouchant, les orifices étant séparés par l'espace libre.

La présente invention concerne également un dispositif de calage variable pour une turbomachine d'aéronef, comportant au moins un guignol tel que décrit ci-dessus.

Avantageusement, le dispositif est adapté pour la commande d'au moins deux rangées annulaires d'aubes fixes, les aubes de chaque rangée étant réparties autour d'un axe à l'intérieur d'un carter et comportant chacune à leur extrémité radialement externe un pivot définissant un axe sensiblement radial de calage de l'aube, le dispositif comportant :

- un actionneur comportant un cylindre destiné à être fixé sur le carter et une tige de piston,
- des premier et second anneaux de commande destinés à être montés rotatifs autour dudit carter, chaque anneau de commande étant destiné à être relié par des biellettes aux pivots des aubes d'une desdites rangées, un boîtier de commande,
- un premier système de liaison comportant un premier guignol tel que défini ci-dessus, ce premier guignol étant articulé respectivement sur le boîtier de commande, sur la tige de piston, à une extrémité d'une barre de synchronisation, et à une extrémité d'un premier ridoir dont une extrémité opposée est articulée sur une chape du premier anneau, et
- un second système de liaison comportant un second guignol qui est articulé respectivement sur le boîtier de commande, sur une extrémité opposée de la barre de synchronisation, et sur une extrémité d'un second ridoir dont une extrémité opposée est articulée sur une chape du second anneau.

De préférence, le boîtier de commande comprend un logement de réception de la portion tubulaire du premier guignol, ce logement étant délimité entre deux parois du boîtier de commande qui sont sensiblement parallèles et qui comprennent des orifices de montage dudit axe commun d'articulation du boîtier de commande, l'une de ces parois étant destinée à être intercalée entre la portion tubulaire et la deuxième patte précitée.

La présente invention concerne encore une turbomachine, en particulier d'aéronef, comportant au moins un dispositif tel que décrit ci-dessus.

**Brève description des figures**

L'invention sera mieux comprise et d'autres détails, caractéristiques et avantages de l'invention apparaîtront à la lecture de la description suivante faite à titre d'exemple non limitatif en référence aux dessins annexés, dans lesquels :

[Fig.1] la figure 1 est une vue schématique partielle en perspective d'une turbomachine ;
[Fig.2] la figure 2 est une vue schématique en perspective d'un dispositif de calage variable de la turbomachine de la figure 1 ;
[Fig.3] la figure 3 est une vue schématique en perspective d'un guignol non plan et d'un boîtier de commande pour un dispositif de calage variable de turbomachine ;
[Fig.4] la figure 4 est une vue schématique en perspective d'un dispositif de calage variable selon l'invention ;
[Fig.5] la figure 5 est une vue schématique en perspective et à plus grande échelle d'un guignol du dispositif de la figure 4 ;
[Fig.6] la figure 6 est une autre vue schématique en perspective du guignol de la figure 5 ; et

[Fig.7] la figure 7 est un graphe montrant l'impact de l'effort transmis par l'actionneur du dispositif, sur les réactions aux extrémités haute et basse d'un guignol.

**Description détaillée de l'invention**

La figure 1 montre une partie d'une turbomachine d'aéronef et en particulier d'un compresseur, ici haute pression, de la turbomachine.

Le compresseur comprend des étages d'aubes de compression, chaque étage comportant une rangée annulaire d'aubes fixes ou de stator et une rangée annulaire d'aubes mobiles ou de rotor. Les rangées d'aubes s'étendent autour d'un même axe qui est l'axe longitudinal de la turbomachine.

La première rangée d'aubes, c'est-à-dire celles située la plus en amont dans le compresseur (par référence à l'écoulement des gaz, de l'amont vers l'aval, dans la turbomachine), est appelée redresseur d'entrée ou RDE. La rangée d'aubes fixes suivante, située en aval, est appelée redresseur étage 1 ou RD1.

Les aubes des rangées RDE et RD1 sont entourées par un carter annulaire de stator 1 centré sur l'axe de la turbomachine. Une seule aube 2 est représentée dans le dessin.

Chaque aube 2 comprend une pale qui est reliée à son extrémité radialement externe par une platine à contour sensiblement circulaire à un pivot cylindrique radial 3 qui définit l'axe de rotation de l'aube et qui est guidé en rotation dans un orifice correspondant du carter externe 1. L'extrémité radialement interne de la pale de chaque aube comprend en général un second pivot cylindrique s'étendant le long de l'axe de rotation de l'aube et guidé en rotation dans un orifice d'un carter interne du compresseur (non représenté).

L'extrémité radialement externe du pivot externe 3 de chaque aube est reliée par un levier ou une biellette 4 à un anneau de commande 5 déplacé en rotation autour du carter 1 par un dispositif de calage variable. La rotation de l'anneau est transmise par les biellettes 4 aux pivots externes 3 des aubes 2 et les fait tourner autour de leurs axes.

Le dispositif de calage, mieux visible à la figure 2, est utilisé pour le calage variable simultanée des deux rangées RDE et RD1 et comporte :

- un actionneur A comportant un cylindre 10 fixé sur le carter 1 et une tige de piston 11,
- un boîtier de commande 12 fixé sur le carter 1,
- un premier système de liaison comportant un premier guignol 7 à quatre articulations ; le guignol 7 est articulé autour d'un pivot 20 sur le boîtier de commande 12 et comprend un premier bras 19 articulé sur la tige de piston 11, un second bras 17 articulé à une extrémité d'une barre de synchronisation 9, et un troisième bras 15 articulé à une extrémité d'un premier ridoir 6a dont une extrémité opposée est articulée sur une chape 5a de l'anneau 5 de commande de la rangée RDE, et
- un second système de liaison comportant un second guignol 8 à trois articulations ; le guignol 8 est articulé autour d'un pivot 21 sur le boîtier de commande 12 et comprend un premier bras 18 articulé sur une extrémité opposée de la barre de synchronisation 9, et un second bras 16 articulé à une extrémité d'un second ridoir 6b dont une extrémité opposée est articulée sur une chape 5b de l'anneau 5 de commande de la rangée RD1.

Pour limiter les chaînes de côtes et faciliter le montage de l'ensemble, l'actionneur A et les systèmes de liaison sont portés par le boîtier de commande 12 qui est fixé sur le carter 1. Ce boîtier 12 comprend une ou plusieurs pattes 12a de fixation au carter, par exemple par des moyens du type vis-écrou et comprend des moyens 13 de fixation du cylindre 10 de l'actionneur A. Le boîtier 12 comprend en outre des logements de montage des guignols 7, 8 et des orifices de montage des pivots 20, 21 d'articulation des guignols, voire d'un pivot 22 additionnel de guidage de la barre de synchronisation 9. Les axes d'articulation des pivots 20, 21 et des bras des guignols 7, 8 sont sensiblement parallèles.

La translation de la tige de piston 11, par rentrée ou sortie vis-à-vis du cylindre 10, provoque une rotation du guignol 7 autour de l'axe de son pivot 20. Cette rotation va d'une part engendrer une translation du ridoir 6a et donc une rotation de l'anneau de commande 5 de la rangée RDE, ainsi qu'un déplacement de la barre de synchronisation 9. Cela entraîne une rotation du guignol 8 autour de l'axe de son pivot 21, qui va se traduire par une translation du ridoir 6b et donc une rotation de l'anneau de commande 5 de la rangée RD1.

Dans l'exemple représenté à la figure 2, le bras 19 du guignol 7 est sensiblement plan. L'extrémité du bras 19 reliée à la tige de piston 11 est située dans un plan P qui passe sensiblement par le milieu de l'axe 23 d'articulation de cette extrémité. Ce plan P passe également par l'extrémité opposée du bras 19 reliée au pivot 20.

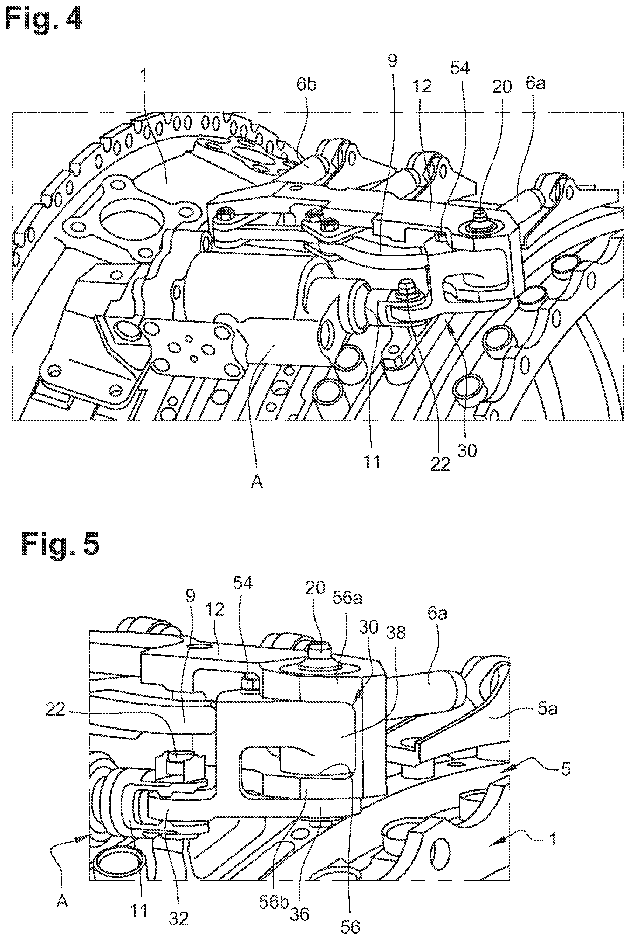

Cependant, dans certaines configurations répondant à des problèmes d'encombrement, le guignol de liaison du boîtier de commande 12 à la tige de piston 11 présente des extrémités articulées dans deux plans P et P' parallèles et espacés l'un de l'autre, comme cela est illustré à la figure 3. En fonctionnement, ce type de configuration entraîne des efforts importants dans le guignol 24 qui peut s'user rapidement voire se rompre. Une des causes principales de cette usure est le moment engendré au niveau du pivot 20. En effet, la liaison pivot au boîtier de commande 12 reçoit un effort déporté par rapport à son centre de rotation situé au niveau du plan P'. L'invention propose une solution à ce problème dont un mode de réalisation est illustré aux figures 4 à 6.

Dans ce mode de réalisation, le guignol 30 comporte un corps monobloc comportant :

- une première partie d'articulation 30a configurée pour être reliée au boîtier de commande 12,
- une deuxième partie d'articulation 30b configurée pour être reliée à la barre de synchronisation 9,
- une troisième partie d'articulation 30c configurée pour être reliée à la tige de piston 11 de l'actionneur A, et
- une quatrième partie d'articulation 30d configurée pour être reliée au ridoir 6a.

La troisième partie 30c comporte une première patte 32 comportant un orifice 34 configuré pour recevoir l'axe 22 d'articulation de la tige de piston 11. Cette patte 32 s'étend dans le plan P qui est sensiblement perpendiculaire à l'axe de l'orifice 34.

La première partie 30a comprend, d'une part, une seconde patte 36 s'étendant sensiblement dans le plan P, et, d'autre part, une portion tubulaire 38 à distance de ce plan P. La patte 36 et la portion tubulaire 38 comportent des orifices 40 alignés qui sont configurés pour recevoir un axe commun d'articulation du boîtier de commande 12 et qui forme le pivot 20 précité. La seconde patte 36 et la portion tubulaire 38 sont séparées par un espace libre. Par espace libre, il est entendu que lorsque l'axe commun d'articulation n'est pas agencé dans les orifices 40, aucun élément ne relie la seconde patte 36 à la portion tubulaire 38.

Chacun des orifices 40 de la portion tubulaire 38 et de la seconde patte 36 est débouchant, les orifices 40 étant séparés par l'espace libre.

Dans l'exemple représenté, le corps du guignol 30 comprend un bras 42 en L qui comprend deux branches 42a, 42b sensiblement perpendiculaires. Une première branche 42a est reliée à la portion tubulaire 38 et une seconde branche 42b est reliée aux pattes 32, 36. Les pattes 32, 36 s'étendent dans le plan P, dans des directions sensiblement opposées.

Le bras 42 supporte donc la portion tubulaire 38 qui est maintenue à distance par rapport à la patte 36. Cette distance J peut être supérieure ou égale à l'épaisseur E de la patte 36. Le bras 42 est relié ici à l'extrémité supérieure de la portion tubulaire 38.

Le corps du guignol 30 comprend en outre des troisième et quatrième pattes 44, 46 sensiblement parallèles entre elles et au plan P. Ces pattes 44, 46 sont écartées l'une de l'autre et comportent des premiers orifices 48 alignés de réception d'un axe 50 commun d'articulation du ridoir 6a, et des seconds orifices 52 alignés de réception d'un autre axe 54 commun d'articulation de la barre de synchronisation 9.

Les pattes 44, 46 s'étendent ici le long de la branche 42a du bras 42, sur un même côté de celle-ci. La patte 44 est située au-dessus de la patte 46 et passe sensiblement par l'extrémité supérieure de la portion tubulaire 38. La patte 44 passe sensiblement par le milieu de la portion tubulaire 38.

On comprend donc que la portion tubulaire 38 a une longueur supérieure à la distance entre les pattes 44, 46. Cette distance est choisie pour accueillir l'extrémité de la barre de synchronisation 9 ainsi que l'extrémité du ridoir 6a. Comme on le voit à la figure 5, le boîtier de commande 12 comprend un logement 56 de réception de la portion tubulaire 38 du guignol 30. Ce logement 56 est délimité par deux parois 56a, 56b du boîtier de commande 12 qui sont sensiblement parallèles et qui comprennent des orifices de montage du pivot 20.

La paroi inférieure 56b est destinée à être intercalée entre la portion tubulaire 38 et la patte 36 et a donc une épaisseur inférieure à la distance J. Le pivot 20 traverse les orifices de la patte 36, de la portion tubulaire 38 et des parois 56a, 56b.

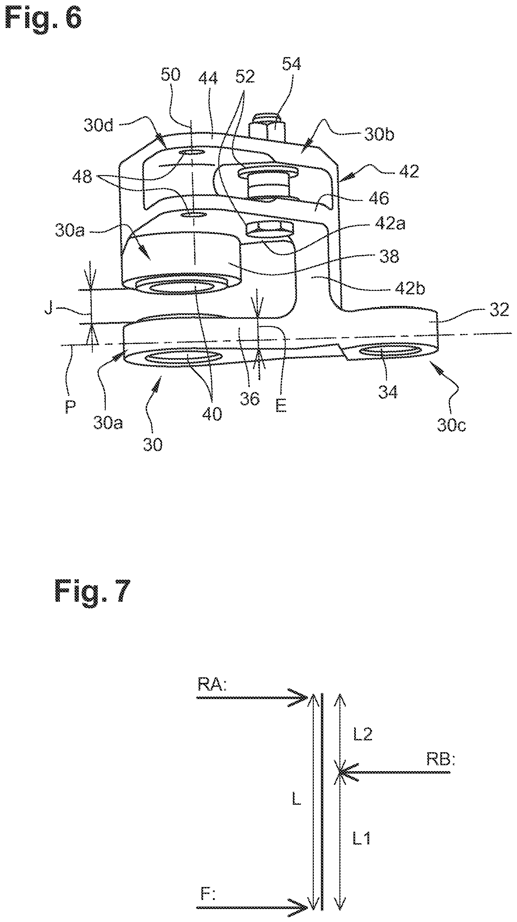

La figure 7 montre de manière schématique la diminution des efforts dans le guignol 30 grâce à l'invention. L correspond à la hauteur du guignol 30 et donc à la longueur de la branche 42b du bras 42. La flèche F correspond à l'effort transmis par la tige de piston 11 du vérin, la flèche RA correspond à la réaction du guignol au niveau de l'extrémité supérieure de la portion tubulaire 38, et la flèche RB correspond à la réaction du guignol en fonction de la position de la patte 36 le long de la branche 42. La diminution des efforts dans le guignol peut s'estimer via les équations d'équilibre suivantes:

-
$$RA = L1/L2 \times F$$

-
$$RB = L/L2 \times F$$

On voit donc que plus L1 tend vers 0 et plus L2 tend vers L, plus les réactions sur le guignol diminuent. C'est ce vers quoi se rapproche la solution proposée avec la patte 36 avantageusement située dans le plan P c'est-à-dire avec L = L2.

Dans un exemple particulier de réalisation de l'invention, L peut être compris entre 20 et 60mm et est par exemple de 40mm.

**Revendications**

1. Guignol (30) pour un dispositif de calage variable d'une turbomachine d'aéronef, ce guignol comportant un corps monobloc comportant une première partie d'articulation (30a) configurée pour être reliée à un boîtier de commande (12) du dispositif, une deuxième partie d'articulation (30b) configurée pour être reliée à une barre de synchronisation (9) du dispositif, une troisième partie d'articulation (30c) configurée pour être reliée à une tige de piston (11) d'un actionneur (A) du dispositif, et une quatrième partie d'articulation (30d) configurée pour être reliée à un ridoir (6a) du dispositif, la troisième partie d'articulation (30c) comportant une première patte (32) qui comporte un premier orifice (34) configuré pour recevoir un axe (22) d'articulation de la tige de piston (11) et qui s'étend dans un plan P perpendiculaire à l'axe de cet orifice, **caractérisé en ce que** la première partie d'articulation (30a) comprend une seconde patte (36) s'étendant dans ledit plan P, et une portion tubulaire (38) à distance dudit plan P, la seconde patte (36) et la portion tubulaire (38) comportant des orifices (40) présentant des axes alignés qui sont configurés pour recevoir un axe commun d'articulation du boîtier de commande (12) et qui sont parallèles à l'axe du premier orifice, la seconde patte (36) étant séparée de la portion tubulaire (38) par un espace libre.

2. Guignol (30) selon la revendication 1, dans laquelle ledit corps comprend un bras (42) en L qui comprend deux branches perpendiculaires, une première (42a) de ces branches étant reliée à la portion tubulaire (38) et l'autre (42b) de ces branches étant reliée aux première et seconde pattes (32, 36).

3. Guignol (30) selon la revendication 1 ou 2, dans laquelle le corps comprend des troisième et quatrième pattes (44, 46) parallèles entre elles et audit plan P, ces troisième et quatrième pattes comportant des premiers orifices (48) présentant des axes alignés de réception d'un axe (50) commun d'articulation dudit ridoir (6a), et des seconds orifices (52) présentant des axes alignés de réception d'un autre axe (54) commun d'articulation de ladite barre de synchronisation (9).

4. Guignol (30) selon la revendication 3, dans laquelle la portion tubulaire (38) a une longueur supérieure à une distance entre lesdites troisième et quatrième pattes (44, 46).

5. Guignol (30) selon l'une des revendications précédentes, dans laquelle la portion tubulaire (38) est séparée de la deuxième patte (36) d'une distance (J) supérieure ou égale à une épaisseur (E) de cette deuxième patte.

6. Guignol (30) selon l'une des revendications précédentes, dans laquelle chacun des orifices (40) de la portion tubulaire (38) et de la seconde patte (36) est débouchant, les orifices (40) étant séparés par l'espace libre.

7. Dispositif de calage variable pour une turbomachine d'aéronef, comportant au moins un guignol (30) selon l'une des revendications précédentes.

8. Dispositif selon la revendication précédente, pour la commande d'au moins deux rangées annulaires d'aubes (2) fixes, les aubes de chaque rangée étant réparties autour d'un axe à l'intérieur d'un carter (1) et comportant chacune à leur extrémité radialement externe un pivot (3) définissant un axe radial de calage de l'aube, le dispositif comportant :

- un actionneur (A) comportant un cylindre (10) destiné à être fixé sur le carter et une tige de piston (11),
- des premier et second anneaux de commande (5) destinés à être montés rotatifs autour dudit carter, chaque anneau de commande étant destiné à être relié par des biellettes (4) aux pivots des aubes d'une desdites rangées,
- un boîtier de commande (12),
- un premier système de liaison comportant un premier guignol (30) tel que défini à l'une des revendications 1 à 6, ce premier guignol (30) étant articulé respectivement sur le boîtier de commande, sur la tige de piston, à une extrémité d'une barre de synchronisation (9), et à une extrémité d'un premier ridoir (6a) dont une extrémité opposée est articulée sur une chape (5a) du premier anneau, et
- un second système de liaison comportant un second guignol (8) qui est articulé respectivement sur le boîtier de commande, sur une extrémité opposée de la barre de synchronisation, et sur une extrémité d'un second ridoir (6b) dont une extrémité opposée est articulée sur une chape (5b) du second anneau.

9. Dispositif selon la revendication précédente, dans lequel le boîtier de commande (12) comprend un logement (56) de réception de la portion tubulaire (38) du premier guignol (30), ce logement étant délimité entre deux parois (56a, 56b) du boîtier de commande qui sont parallèles et qui comprennent des orifices de montage dudit axe commun d'articulation du boîtier de commande, l'une (56b) de ces parois étant destinée à être intercalée entre la portion tubulaire (38) et la deuxième patte (36) précitée.

10. Turbomachine d'aéronef, comportant au moins un dispositif selon l'une des revendications 7 à 9.

**Patentansprüche**

1. Verstellhebel (30) für eine Vorrichtung mit variabler Feststellposition einer Turbomaschine eines Luftfahrzeugs, wobei dieser Verstellhebel einen einteiligen Körper umfasst, umfassend ein erstes Gelenkteil (30a), das dazu ausgelegt ist, mit einem Steuerkasten (12) der Vorrichtung verbunden zu werden, ein zweites Gelenkteil (30b), das dazu ausgelegt ist, mit einem Synchronisationsstab (9) der Vorrichtung verbunden zu werden, ein drittes Gelenkteil (30c), das dazu ausgelegt ist, mit einer Kolbenstange (11) eines Aktuators (A) der Vorrichtung verbunden zu werden, und ein viertes Gelenkteil (30d), das dazu ausgelegt ist, mit einer Spannschraube (6a) der Vorrichtung verbunden zu werden, wobei das dritte Gelenkteil (30c) eine erste Lasche (32) umfasst, die eine erste Öffnung (34) umfasst, die dazu ausgelegt ist, eine Gelenkachse (22) der Kolbenstange (11) aufzunehmen und die sich in einer Ebene P senkrecht zur Achse dieser Öffnung erstreckt, **dadurch gekennzeichnet, dass** das erste Gelenkteil (30a) eine zweite Lasche (36), die sich in der Ebene P erstreckt, und einen rohrförmigen Abschnitt (38) beabstandet von der Ebene P umfasst, wobei die zweite Lasche (36) und der rohrförmige Abschnitt (38) Öffnungen (40) umfassen, die ausgerichtete Achsen aufweisen, die dazu ausgelegt sind, eine gemeinsame Gelenkachse des Steuerkastens (12) aufzunehmen und die parallel zur Achse der ersten Öffnung sind, wobei die zweite Lasche (36) durch einen freien Rum von dem rohrförmigen Abschnitt (38) getrennt ist.

2. Verstellhebel (30) nach Anspruch 1, wobei der Körper einen L-förmigen Arm (42) umfasst, der zwei senkrechte Zweige umfasst, wobei ein erster (42a) dieser Zweige mit dem rohrförmigen Abschnitt (38) verbunden ist und der andere (42b) dieser Zweige mit der ersten und der zweiten Lasche (32, 36) verbunden ist.

3. Verstellhebel (30) nach Anspruch 1 oder 2, wobei der Körper eine dritte und eine vierte Lasche (44, 46) umfasst, die parallel zueinander und zur Ebene P sind, wobei diese dritte und vierte Lasche erste Öffnungen (48), die ausgerichtete Achsen zur Aufnahme einer gemeinsamen Gelenkachse (50) der Spannschraube (6a) aufweisen, und zweite Öffnungen (52), die ausgerichtete Achsen zur Aufnahme einer anderen gemeinsamen Gelenkachse (54) des Synchronisationsstabs (9) aufweisen, umfassen.

4. Verstellhebel (30) nach Anspruch 3, wobei der rohrförmige Abschnitt (38) eine größere Länge als ein Abstand zwischen der dritten und der vierten Lasche (44, 46) aufweist.

5. Verstellhebel (30) nach einem der vorstehenden Ansprüche, wobei der rohrförmige Abschnitt (38) von der zweiten Lasche (36) um einen Abstand (J) größer oder gleich einer Dicke (E) dieser zweiten Lasche getrennt ist.

6. Verstellhebel (30) nach einem der vorstehenden Ansprüche, wobei jede der Öffnungen (40) des rohrförmigen Abschnitts (38) und der zweiten Lasche (36) ausmündend sind, wobei die Öffnungen (40) durch den freien Raum getrennt sind.

7. Vorrichtung mit variabler Feststellposition für eine Turbomaschine eines Luftfahrzeugs, umfassend mindestens einen Verstellhebel (30) nach einem der vorstehenden Ansprüche.

8. Vorrichtung nach dem vorstehenden Anspruch, für die Steuerung von mindestens zwei ringförmigen Reihen von Statorschaufeln (2), wobei die Schaufeln jeder Reihe um eine Achse im Inneren eines Gehäuses (1) verteilt sind und jeweils an ihrem radial äußeren Ende einen Drehzapfen (3) umfassen, der eine radiale Feststellachse der Schaufel definiert, wobei die Vorrichtung umfasst:

     - einen Aktuator (A), umfassend einen Zylinder (10), der dazu vorgesehen ist, auf dem Gehäuse und einer Kolbenstange (11) befestigt zu werden,
     - einen ersten und einen zweiten Steuerring (5), die dazu vorgesehen sind, drehbar um das Gehäuse montiert zu werden, wobei jeder Steuerring dazu vorgesehen ist, durch Schaltgestänge (4) an den Drehzapfen der Schaufeln einer der Reihen verbunden zu werden,
     - einen Steuerkasten (12),
     - ein erstes Verbindungssystem, das einen ersten Verstellhebel (30) wie in einem der Ansprüche 1 bis 6 definiert umfasst, wobei dieser erste Verstellhebel (30) jeweils auf dem Steuerkasten, auf der Kolbenstange, an einem Ende eines Synchronisationsstabs (9) und an einem Ende einer ersten Spannschraube (6a) angelenkt ist, bei der ein gegenüberliegendes Ende an einer Abdeckung (5a) des ersten Rings angelenkt ist, und
     - ein zweites Verbindungssystem, das einen zweiten Verstellhebel (8) umfasst, der jeweils auf dem Steuerkasten, auf einem gegenüberliegenden Ende des Synchronisationsstabs und auf einem Ende einer zweiten Spannschraube (6b) angelenkt ist, bei der ein gegenüberliegendes Ende auf einer Abdeckung (5b) des zweiten Rings angelenkt ist.

9. Vorrichtung nach dem vorstehenden Anspruch, wobei der Steuerkasten (12) einen Sitz (56) zur Aufnahme des rohrförmigen Abschnitts (38) des ersten Verstellhebels (30) umfasst, wobei dieser Sitz zwischen zwei Wänden (56a, 56b) des Steuerkastens begrenzt ist, die parallel sind und die Öffnungen zur Montage der gemeinsamen Gelenkachse des Steuerkastens umfassen, wobei die eine (56b) dieser Wände dazu vorgesehen ist, zwischen dem rohrförmigen Abschnitt (38) und der oben erwähnten zweiten Lasche (36) eingefügt zu werden.

10. Turbomaschine eines Luftfahrzeugs, umfassend mindestens eine Vorrichtung nach einem der Ansprüche 7 bis 9.

**Claims**

1. A bellcrank (30) for a variable adjustment device for an aircraft turbomachine, this bellcrank comprising a one-part body comprising a first articulation part (30a) configured to be connected to a control box (12) of the device a second articulation part (30b) configured to be connected to a synchronization bar (9) of the device, a third articulation part (30c) configured to be connected to a piston rod (11) of an actuator (A) of the device, and a fourth articulation part (30d) configured to be connected to a turnbuckle (6a) of the device, the third articulation part (30c) comprising a first tab (32) which comprises a first orifice (34) configured to receive an axle (22) for articulating the piston rod (11) and which extends in a plane P perpendicular to the axis of this orifice, **characterized in that** the first articulation part (30a) comprises a second tab (36) extending in said plane P and a tubular portion (38) at a distance from said plane P, the second tab (36) and the tubular portion (38) comprising orifices (40) with aligned axes which are configured to receive a common axle for articulating the control box (12) and which are parallel to the axis of the first orifice, the second tab (36) being separated from the tubular portion (38) by a free space.

2. The bellcrank (30) according to claim 1, wherein said body comprises an L-shaped arm (42) which comprises two perpendicular branches, a first one (42a) of these branches being connected to the tubular portion (38) and the other one (42b) of these branches being connected to the first and second tabs (32, 36).

3. The bellcrank (30) according to claim 1 or 2, wherein the body comprises third and fourth tabs (44, 46) parallel to each other and to said plane P, these third and fourth tabs comprising first orifices (48) having aligned axes for receiving a common axle (50) for articulating said turnbuckle (6a), and second orifices (52) having aligned axes for receiving another common axle (54) for articulating said synchronization bar (9).

4. The bellcrank (30) of claim 3, wherein the tubular portion (38) has a length greater than a distance between said third and fourth tabs (44, 46).

5. The bellcrank (30) according to one of the preceding claims, wherein the tubular portion (38) is separated from the second tab (36) by a distance (J) greater than or equal to a thickness (E) of this second tab.

6. The bellcrank (30) according to any one of the preceding claims, wherein each of the orifices (40) in the tubular portion (38) and the second tab (36) is through-going, the orifices (40) being separated by the free space.

7. A variable adjustment device for an aircraft turbomachine, comprising at least one bellcrank (30) according to one of the preceding claims.

8. The device according to the preceding claim, for controlling at least two annular rows of stationary vanes (2), the vanes of each row being distributed about an axis inside a casing (1) and each comprising at their radially external end a pivot (3) defining a radial axis for adjusting the vane, the device comprising:

   - an actuator (A) comprising a cylinder (10) intended to be attached to the casing and a piston rod (11),
   - first and second control rings (5) intended to be rotatably mounted around said casing, each control ring being intended to be connected by connecting rods (4) to the pivots of the vanes of one of said rows,
   - a control box (12),
   - a first connection system comprising a first bellcrank (30) as defined in one of claims 1 to 6, this first bellcrank (30) being articulated respectively on the control box, on the piston rod, on one end of a synchronization bar (9), and on one end of a first turnbuckle (6a), an opposite end of which is articulated on a clevis (5a) of the first ring, and
   - a second connection system comprising a second bellcrank (8) which is articulated respectively on the control box, on an opposite end of the synchronization bar, and on one end of a second turnbuckle (6b), an opposite end of which is articulated on a clevis (5b) of the second ring.

9. The device according to the preceding claim, wherein the control box (12) comprises a housing (56) for receiving the tubular portion (38) of the first bellcrank (30), this housing being delimited between two walls (56a, 56b) of the control box which are parallel and which comprise orifices for mounting said common axle for articulating the control box, one (56b) of these walls being intended to be interposed between the tubular portion (38) and the aforementioned second tab (36).

10. An aircraft turbomachine, comprising at least one device according to one of claims 7 to 9.

# Fig. 1

## Fig. 2

## Fig. 3

# Fig. 4

# Fig. 5

# Fig. 6

# Fig. 7

**RÉFÉRENCES CITÉES DANS LA DESCRIPTION**

**Documents brevets cités dans la description**

- FR 2960611 A1
- FR 2856424 A1